# EUROPEAN PATENT APPLICATION

(11) **EP 4 398 164 A1**
(43) Date of publication of application: **10.07.2024**
(21) Application number: 24150017.2
(22) Date of filing: 02.01.2024
(51) Int. Cl.: G06Q 10/0631, G06N 20/00, G06Q 10/0875

(54) **SYSTEM AND METHOD FOR AUTOMATED SKILL FORECAST AND FULFILLMENT**

(30) Priority: 03.01.2023 US 202363436714 P
(71) Applicant: Cognizant Technology Solutions India Pvt. Ltd., Chenni - 600 097 Tamil Nadu (IN)
(72) Inventor: DIAZ,, Kathryn, Whitehouse Station, 08889 (US); RHODES,, Alma, Kansas City, 66109 (US); MOHANA, Lavanya, Bangalore, 560035 Karnataka (IN); KUMAR, Rohit, Bangalore, 560103 Karnataka (IN); BELL, Jason, Kings Norton Leicestershire LE7 9BF (GB); BRUNDIDGE, Blake Austin, Austin, Texas 78759 (GB)
(74) Representative: Potter Clarkson

(57) **Abstract**

A system for automated skill forecast and fulfillment in an enterprise environment is disclosed. Based on the received inputs from enterprise database comprising solution/customer information, service lines information, technical skills and job description, the system creates technical skill clusters and Bill of Materials. By mapping the technical skill clusters, Bill of Materials and role demand using Artificial Intelligence (AI) engine based on proficiencies, the system generates stock keeping units (SKUs) which is used as building blocks, supported by future-ready taxonomy for skill forecast and fulfilment, thereby achieving increased accuracy and efficiency in skill forecasting and effective fulfillment for an enterprise.

## Description

### FIELD OF INVENTION

The present technique relates to automated systems in an enterprise environment. Specifically, the technique relates to Artificial Intelligence based automated forecasting system in an enterprise environment. More specifically, the technique relates to Artificial Intelligence-based forecasting system to manage technical skills in a technology service environment.

### BACKGROUD

A skill inventory in a professional service organization comprises information about individuals (employees in case of organization) and their suitability for different projects/ assignments. Skill inventories are configured to store employee information such as name, job-related skills, training, experience etc. which may be useful during project assignments. Organizations use these inventories to assess whether the current employee(s) can meet requirements in client projects or company goals. Understanding the company's pool of current skills/talents and future skill requirement aids in company's efforts towards strategic planning.

In today's world where the organizations are globally dispersed over multiple geographies, organizations face a problem of decentralized and disconnected skill inventory. Decentralization puts increased pressure at regional levels as it lacks common governance across service lines. It has also resulted in duplication/proliferation of leaf skills leading to complexity and lack of direct linkage to market. This broken link and complexity in skills and critical processes (pricing, demand-supply, and rewards) has resulted in inefficiencies across the customer and employee value chain.

In addition to global decentralization, the future landscape of work in the technical services sector is changing. The pace of change is accelerating as technology develops, forcing change to employment models and retention of in-demand skills. Employees are increasingly looking to their skills to provide them with interesting and challenging work rather than roles and titles.

Hence, there is a need of a technical solution to overcome the above-mentioned problem.

### SUMMARY

As mentioned in the background section, in order to overcome the problem of dispersed, disconnected and decentralized skill inventory and to achieve modernized view of skills, proposed is an automated system for enterprise-wide, market oriented skill framework, comprising machine learning models for forecasting skills and efficient skill-job demand mapping, efficient use of Bill of Materials (BOM)/ Stock Keeping Unit (SKU) which are manufacturing supply chain concepts within technical/professional service environment and is designed to enable: (a) premium pricing for leading skill clusters, in line with the market; (b) solutioning larger deals and managed services using a common skill framework design aligned externally; (c) an agile demand-supply chain, including planning, demand capture, fulfillment, and skilling in line of market demand and needs; (d) skill clusters and proficiencies as the foundation for talent management (including rewards); and (e) decoupling of jobs and roles from supply side decision making which enables skills to be the determining factor in meeting customer/client demand.

Disclosed are a system, and a method for automated skill forecast and fulfillment.

In one aspect, a method for automated skill forecast and fulfilment is disclosed and the method comprising, receiving, by an Artificial Intelligence (AI) engine, a skill demand information from a skill cluster repository and a skill supply information from a skill inventory. The skill demand information comprises at least one or combination of technological services, skill clusters, role definitions, functional skills, demand unit definitions and domain skills. The skill supply information comprises at least one or combination of role definitions, technical skills, domain skills, proficiency levels and location preferences. The received skill demand information and the skill supply information is parsed, and a bill of materials is generated using the parsed skill demand information. The generated bill of materials is mapped with the skill supply information based on pre-defined rules and one or more stock keeping units are generated based on the mapping. The generated one or more stock keeping units comprise list of resources mapped to the skill demand information, and is a combination of technological skill, role definitions, domain skill and location information. The generated one or more stock keeping units are deployed at the client network. Further the skill demand information stored in the skill cluster repository and the skill supply information stored in the skill inventory is updated based on the deployment of the generated one or more stock keeping units. Further, the pre-defined rules are updated by the AI engine based on the generated one or more stock keeping units which is used and applied for forecasting by the AI engine in subsequent iteration(s).

In another aspect, a system for automated skill forecast and fulfilment is disclosed and the system comprising, at least one processor, at least one memory unit operatively coupled to the at least one processor having stored instructions, an Artificial Intelligence (AI) engine hosted on a cloud computing environment, wherein execution of the instruction stored on the at least one memory unit by the at least one processor causes the AI engine to receive a skill demand information from a skill cluster repository and a skill supply information from a skill inventory. The skill demand information comprises at least one or combination of technological services, skill clusters, role definitions, functional skills, demand unit definitions and domain skills. The skill supply information comprises at least one or combination of role definitions, technical skills, domain skills, proficiency levels, and location preferences. The received skill demand information and the skill supply information is parsed, and a bill of materials is generated using the parsed skill demand information. The generated bill of materials is mapped with the skill supply information based on pre-defined rules and one or more stock keeping units are generated based on the mapping. The generated one or more stock keeping units comprise list of resources mapped to the skill demand information, and is a combination of technological skill, role definitions, domain skill and location information. The generated one or more stock keeping units are deployed at the client network. Further the skill demand information stored in the skill cluster repository and the skill supply information stored in the skill inventory is updated based on the deployment of the generated one or more stock keeping units. Further, the pre-defined rules are updated by the AI engine based on the generated one or more stock keeping units which is used and applied for forecasting by the AI engine in subsequent iteration(s).

In yet another aspect, a system for automated skill forecast and fulfillment is disclosed and the system comprising one or more components such as, but not limited to pricing module, pipeline module, revenue and resource forecasting module, capacity and demand planning module, demand management module, matching and fulfillment module, skill forecasting and planning module, workforce management module, bench information database, skilling and external recruitment module, and/or rewarding engine, wherein the system is configured to perform skill forecasting and fulfillment by identifying premium skills through machine learning models, creating skill cluster tags, mapping of employees to job framework and perform impact assessment.

The method, and the system disclosed herein may be implemented in any means for achieving various aspects and may be executed in a form of a machine-readable medium embodying a set of instructions that, when executed by a machine, cause the machine to perform any of the operations disclosed herein. Other features will be apparent from the accompanying drawings and from the detailed description that follows.

### BRIEF DESCRIPTION OF DRAWINGS

Example embodiments are illustrated by way of example and not as limitation in the figures of the accompanying drawings, in which like references indicate similar elements and in which:
**Figure 1** is a diagrammatic representation of a data processing system capable of processing a set of instructions to perform any one or more of the methodologies herein, according to one or more embodiments.
**Figure 2** is an illustration of various components of the system for automated skill forecast and fulfilment, according to one or more embodiments.
**Figure 2A** is simplified block diagram illustrating various components of the system for automated skill forecast and fulfillment, according to one or more embodiments.
**Figure 3** is an exemplary illustration of skill clusters, according to one or more embodiments.
**Figure 4** is an exemplary illustration of mapping of technical skill clusters with skill proficiency levels, according to one or more embodiments.
**Figure 5** is an illustration of using employee SKUs as building blocks for skill framework, according to one or more embodiments.
**Figure 6** is a block diagram illustrating a linkage between demand, skills, and rewards and the various components of the system for automated skill forecast and fulfillment, according to one or more embodiments.

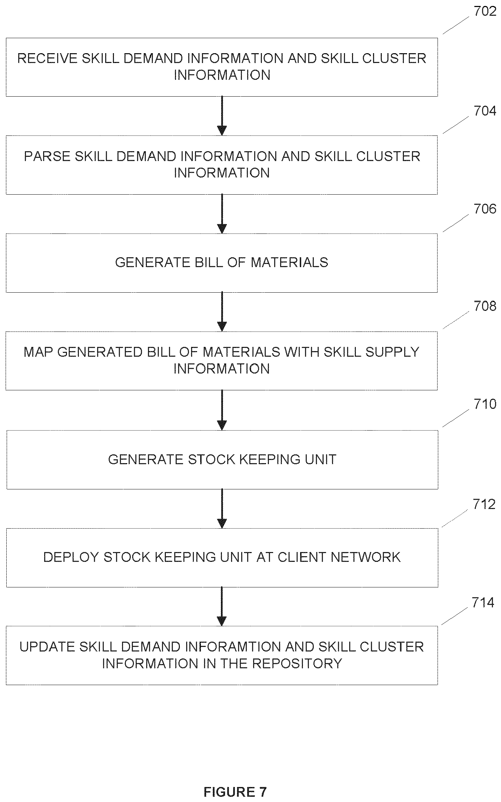

**Figure 7** is a process flow diagram for automated skill forecast and fulfilment, according to one or more embodiments.

Other features of the present embodiments will be apparent from the accompanying drawings and from the detailed description that follows.

### DETAILED DESCRIPTION

Due to decentralized skills inventory with duplication/proliferation across service lines, different sources of skills are used across various processes and there is limited governance to drive accuracy and integrity of skills. The existing systems lack real-time insights into emerging, sun-setting, premium skills in the market. Also, skills are not aligned to client requirements and hence on-time fulfillment is affected by inability to accurately forecast requirements for high demand skills. Lack of well-defined adjacencies are limiting the ability to optimize learning spend. Absence of forecasts that enable proactive skilling is leading to higher bench and external recruitment. Undefined proficiencies are resulting in lack of internal and client trust in resource capabilities, with a high proportion of interview rejections.

One of the objectives of technology described in various embodiments of the present disclosure is to overcome the problem mentioned in the background section through a system with Artificial Intelligence capability for automated skill forecast and fulfillment. The system may be configured to identify premium skills through machine learning models, by creating skill cluster tags to reflect premiumization. By using stock keeping units (SKUs) as building blocks, the system may generate future ready taxonomy, to evolve new skills, clusters, and services. The learning pathways generated by the system is aligned to focus on developing premium skills with resulting impact to employee value proposition.

In one or more embodiments, the system for automated skill forecast and fulfillment provides single/centralized inventory with tagged skills and well-define adjacencies which helps in accurate alignment of proficiency levels to industry accredited standards. In order to map the skills with job requirement efficiently, the system defines organization reporting structure, along with team charters, job description, performance metrics aligned across different roles. Further, the system is configured to develop job catalogue, job level guides, job titling framework along with calibration of job within and across different units of the organization. The system, with trained machine learning models, may be configured to forecast skills, perform mapping of employees to job framework and perform impact assessment. The system may be configured to develop transition principles such as, but not limited to job, title, and compensation, and create rollout plan.

In one or more embodiments, the system may be configured to develop and deploy governance protocols and processes, embedding governance and job evaluation methodology into the organization. Through the machine learning capability and with the analysis of previously stored/processed data, the system may also be configured to understand job requirement of the next possible role for an employee, determine roles based on personal aspirations of an employee and aligned to skills and capabilities, and design a learning path for the employee.

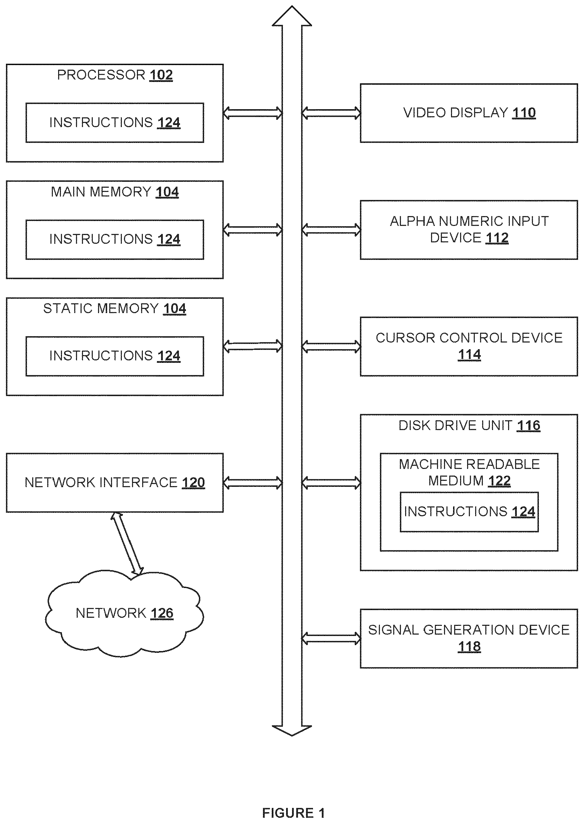

**Figure** 1 is a diagrammatic representation of a machine and/or data processing device capable of processing a set of instructions to perform any one or more of the methodologies herein, according to one embodiment. The machine and/or the data processing device in the example form, comprises a computer system **100** within which a set of instructions, for causing the machine to perform any one or more of the methodologies discussed herein, may be executed. In various embodiments, the machine operates as a standalone device and/or may be connected (e.g., networked) to other machines.

A machine may be a personal computer (PC), laptop or an embedded system, cloud computing system, and/or any machine capable of executing a set of instructions (sequential or otherwise) that specify actions to be taken by that machine. Further, while only a single machine is illustrated, the term "machine" shall also be taken to include any collection of machines that individually and/or jointly execute a set (or multiple sets) of instructions to perform any one and/or more of the methodologies discussed herein.

The example computer system **100** includes a processor **102** (e.g., a central processing unit (CPU) a graphics processing unit (GPU) and/or both), a main memory **104** and a static memory **106,** which communicate with each other via a bus **108.** The computer system **100** may further include a video display unit **110** (e.g., a liquid crystal displays (LCD), Light Emitting Diodes (LED) displays and/or a cathode ray tube (CRT)). The computer system **100** also includes an alphanumeric input device **112** (e.g., a keyboard), a cursor control device **114** (e.g., a mouse, a trackpad, a touchscreen, or a remote pointing device), a disk drive unit **116,** a signal generation device **118** (e.g., a speaker), and a network interface **120.**

The disk drive unit **116** includes a machine-readable medium **122** on which is stored one or more sets of instructions **124** (e.g., software) embodying any one or more of the methodologies and/or functions described herein. The instructions **124** may also reside, completely and/or at least partially, within the main memory **104,** within the static memory **106** and/or within the processor **102** during execution thereof by the computer system **100,** the main memory **104** and the processor **102** also constituting machine-readable media.

The instructions **124** may further be transmitted and/or received over a network **126** via the network interface **120.** While the machine-readable medium **122** is shown in an example embodiment to be a single medium, the term "machine-readable medium" should be taken to include a single medium and/or multiple media (e.g., a centralized and/or distributed database, and/or associated caches and servers) that store the one or more sets of instructions. The term "machine-readable medium" shall also be taken to include any medium that is capable of storing, encoding and/or carrying a set of instructions for execution by the machine and that cause the machine to perform any one or more of the methodologies of the various embodiments. The term "machine-readable medium" shall accordingly be taken to include, but not be limited to, solid-state memories, optical media and magnetic media.

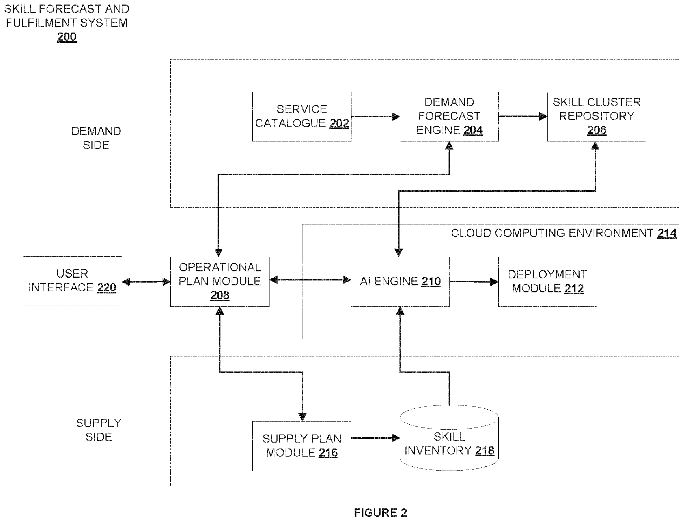

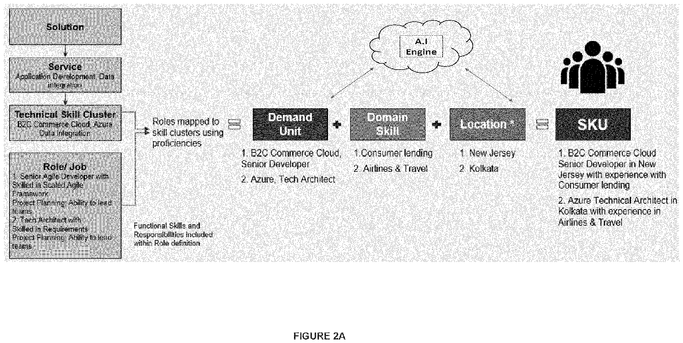

**Figure 2** illustrates various components of the system for automated skill forecast and fulfilment **200,** according to one or more embodiments. The system comprises one or more components which may be grouped into supply side components, demand side components and Artificial Intelligence (AI) components. The demand side components comprise one or more components, but not limited to a service catalogue **202,** a demand forecast engine **204,** and a skill cluster repository **206.** The service catalogue **202** comprises list of technological services (also referred as 'service offering') that an organization will be offering to the clients/customers, or the technological services offered when the organization goes for market offerings in the technological domain. For example, the list of technological services may be hundreds of services that organization may offer such as, but not limited to, Conversational AI, Full Stack Engineering Application Development, Hybrid Cloud Migration, Data Governance, Master Data Management etc. Each service offerings in the service catalogue **202** may be mapped to skilled required to deliver the technological service. The demand forecast engine **204** may be configured to predict and project how potentially the demand will be for the time period mentioned by the user, illustrating the growth in the market, based on the list of technological services present in the service catalogue **202.** The skill cluster repository **206** may be a database or repository or storage device which is a representation of service catalogue **202,** but in terms of technical skills. Exemplary technical skills and their mapping is illustrated in **Table 1**. The services column in the **Table 1** represents list of technological services associated with the service catalogue **202.** The technical skill cluster column in the **Table 1** represents the dataset associated with the skill cluster repository **206.** The roles column in **Table 1** represents a part of dataset associated with the demand forecast engine **204.**

**Table 1**

| **Technological Services** | **Technical Skill Cluster** | **Roles** |
|---|---|---|
| Conversational AI | Conversational AI - Azure | Jr. Developer/ Sr. Developer/ Tech Architect/Principal Tech Architect |
| | Conversational AI - AWS | Jr. Developer/ Sr. Developer/ Tech Architect/Principal Tech Architect |
| | Conversational AI - GCP | Jr. Developer/ Sr. Developer/ Tech Architect/Principal Tech Architect |
| Full Stack Engineering | Core .NET | Jr. Developer/ Sr. Developer/ Tech Architect |
| Application Development | Core Java | Jr. Developer/ Sr. Developer/ Tech Architect |
| | .NetAng | Jr. Developer/ Sr. Developer/ Tech Architect |
| Hybrid Cloud Migration | VMW are-NetApp | Jr. Developer/ Sr. Developer/ Tech Architect/Principal Tech Architect |
| | VMWare-Dell | Jr. Developer/ Sr. Developer/ Tech Architect/Principal Tech Architect |
| Data Governance | Informatica-led Data Governance | Jr. Developer/ Sr. Developer/ Tech Architect/Principal Tech Architect |
| | Talent cloud-led Data Governance | Jr. Developer/ Sr. Developer/ Tech Architect/Principal Tech Architect |
| | IBM DataStage-led Data Governance | Jr. Developer/ Sr. Developer/ Tech Architect/Principal Tech Architect |
| Master Data Management | IBM MDM | Jr. Developer/ Sr. Developer/ Tech Architect/Principal Tech Architect |
| | Informatica MDM | Jr. Developer/ Sr. Developer/ Tech Architect/Principal Tech Architect |

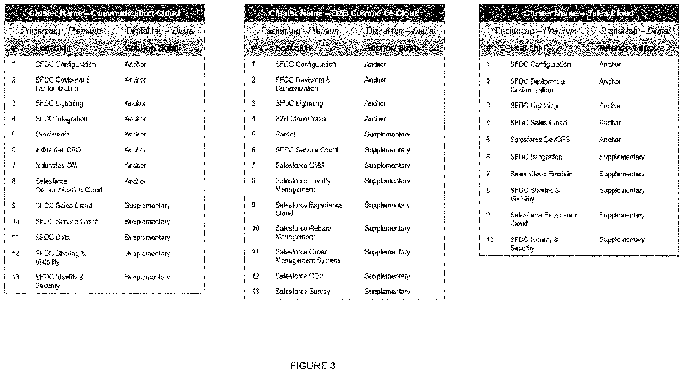

In one or more embodiments, the supply side components of the system for automated skill forecast and fulfilment **200** may comprise one or more components, but not limited to supply plan module **216** and a skill inventory **218.** The supply plan module **216** may be configured to store and provide information about employee resources available with the organization with information of technical skills associated with each of the employees. The skill inventory **218** may be a database or repository or storage device to store skills information grouped into multiple clusters as illustrated in **Figure 3****.** The AI components of the system for skill forecast and fulfilment **200** may comprise one or more functional components such as, but not limited to, operational module **208** communicatively coupled to a user interface **220,** an Artificial Intelligence (AI) engine **210,** and a deployment module **212** which are hosted on a cloud computing environment **214.**

In one or more embodiments, the operational plan module **208** may be configured to render the data fetched from demand forecast engine **204** and supply plan module **218** at a user interface **220** in a graphical format to provide overall visibility of the data from both supply side and demand side to the user. The user interface **200** may be configured to receive inputs from user and communicate to the operation plan module **208** which causes dynamic change in representation of data and format of the data presented at the user interface **220.** The user interface **220** along with the operational plan module **208,** the demand side components and the supply side components may be present at the organization/enterprise environment.

In one or more embodiments, the AI engine **210** hosted on the cloud computing environment **214** comprises a machine learning model and may be configured to receive data from the skill cluster repository **206** and the skill inventory **218** and may also be operatively coupled to the operational plan module **208** either synchronously or asynchronously. A user associated with user interface **220** may trigger the process or the AI engine **210** may automatically initiate the process of receiving the data from skill repository **206** and sill inventory **210** based on an external trigger. The external trigger may be initiated by the client network. Alternatively, the AI engine **210** may continuously monitor the data stored in skill cluster repository **206** and skill inventory 218 and initiate the process by detecting new dataset or modified dataset in the skill cluster repository **206** and/or skill inventory **218.** The data received from the skill cluster repository **206** and the skill inventory **218** may be processed to generate stock keeping unit that is required to forecast skill and fulfilment. The AI engine **210** may receive skill demand information from the skill cluster repository **206** and skill supply information from skill inventory **218.** The skill demand information may comprise information such as, but not limited to technological services, skill clusters, role definitions, functional skills, responsibilities in each role, demand unit definitions, job locations, and/or domain skills. The skill supply information may comprise information such as, but not limited to role definitions, technical skills, domain skills, proficiency levels, and location preferences, etc. for each employee of the organization. The domain skill may be such skills which required in any technical domain such as retail merchandizing, retail supply chain etc. technical skill are those skills within each domain skills Shopify in Retail merchandizing. Another example may be, `Cloud' is a domain skill and programming language for an employee to develop or test cloud-based application are technical skills. The skill demand information and the skill supply information may be stored in respective repositories with tags associated with each skill. For example, the skills illustrated in **Figure 3** is grouped into multiple clusters wherein each of the skill in cluster is tagged such as `anchor' and 'supplementary'. For example, the skill `SFDF Configuration' is tagged as 'Anchor' skill and the skill `SFDC Data' is tagged as 'supplementary'.

In one or more embodiments, the AI engine **210** may be configured to receive information in a structured format (for example the tabular format) or unstructured format (for example, natural language text extracted from job description of employee or professional network over the internet or resume and any description available in the natural language). In case of unstructured format such as natural language, the AI engine may be configured to extract keywords from the input present in the unstructured format, convert the input into structured format and store the information in structured format in respective repositories for further use.

In one or more embodiments, the received skill demand information may be parsed to extract information such as skill information, role definition etc. to generate a Bill of Materials (BOM). The Bill of Materials may be list of multiple combination of skill cluster and job position requirement for which the employee needs to be allocated. The generated Bill of Materials may be mapped with skill supply information along with the location preference of each employee as per the information stored along with skill supply information in the skill inventory **218** based on pre-defined rules to generate plurality of stock keeping units (SKU). The stock keeping units may comprise list of deployable resources (employees) that meet the requirement of skill demand information and the pre-defined rules, and the generated stock keeping units may be rendered as output by the deployment module **212.** The deployment module **212** may be configured to deploy the generated stock keeping unit at the client network and provide graphical representation of mapping of resources to respective demand. The mapping represents which resource(s) meets the requirement(s) as per the skill demand information, for example - who can be deployed against a particular skill in a particular location.

In one or more embodiments, the pre-defined rules may be created by the user, based on the skill demand information. For example, if a skill has location preference of `New York' and the required skill `consumer lending', an employee with same location preference and having the skill `consumer lending' will become part of the stock keeping unit generated by the AI engine **210.** The stock keeping units generated by the AI engine **210** may be deployed at the client (or customer) database/network by the deployment module **210.** Based on the generated stock keeping units, the skill cluster repository **206** and skill inventory **218** may be updated with allocation information that is generated as stock keeping units and the presently generated stock keeping units may be used as historic data using which the pre-defined rules are updated automatically causing the machine learning models to predict and map effectively in the next iteration. In the subsequent iteration of generating stock keeping units, the updated pre-defined rules are used by the AI engine **210** along with the updated skill demand information and the updated skill supply information. In one or more embodiments, the skill demand information and skill supply information may be updated manually by the user. In another embodiment, the AI engine **210** may be configured to update the skill demand information and skill cluster information based on the information related to allocation completed by the clients/customers of the organization, indicating which employee has been deployed or which employee is yet to be deployed against the skills and requirement in a particular location.

**Figure 2A** is simplified block diagram illustrating various components of the system for skill forecast and fulfillment, according to one or more embodiments. In one or more embodiments, the system may be configured to receive information such as but not limited to, solution/customer information, service lines information (also referred as organizational structure or services), technical skill cluster and job description (also referred as `role definition' or skill cluster) from an enterprise database (also referred as `skill cluster repository' and/or skill inventory ). The functional skills and responsibilities may be defined under role definition. The roles may be mapped to technical skill cluster using Artificial Intelligence (AI) engine **210** hosted on cloud computing environment **214** based on proficiencies. The demand unit is the Bill of Materials generated by AI engine **210** as illustrated in **Figure 2****.** By processing the received information along with the information related to demand unit, domain skill and location preferences i.e., processing the technical skill cluster, and role demand from the client, with the mapping of domain skills to the demand from the client and the location preferences, the resultant may be employee SKUs, an inventory of skills, which are further used for skill fulfillment.

In an exemplary embodiment, in any unified skills framework, if there are about nine thousand technical skills that could map to 10 different job roles in the organization, and with 60 different domain skills, with about 25 to 30 location preferences, and if customer asks for a combination of skills, the result would be about 4.5 million to 9.5 million possible combinations, which is a tedious task to process. The system, through AI engines may be configured to group the skills into clusters based on the market research, which may reduce the complexity by about 4/10^{th}, in which case the combination comes up to thousands resulting in about 450K to 950K SKUs. The numbers are still big, but with the system, the processing data and processing time is reduced for effective skill mapping, forecast and analysis.

**Figure 3** is an exemplary illustration of skill clusters (also referred as `technical skill clusters'), wherein the skill requirements are grouped into multiple clusters. As illustrated in the **Figure 3****,** exemplary skill cluster may be `Communication cloud', `B2B Commerce cloud' and `Sales Cloud'. A premium tag may be associated for skill clusters which indicates that the skill clusters (or technical skill clusters) have higher market demand than supply, hence earning a premium rate. Anchor leaf skill (those skills which have 'Anchor' mentioned under `Anchor/Suppl.' column) indicates individual tools/ technologies that are mandatorily required within a technical skill cluster to deliver a service, for example Conversational AI, Data Movement etc. as illustrated in **Table 1**. Supplementary leaf skill indicates individual tools/ technologies within a technical skill cluster that would help deliver the service but are not mandatory. The technical skill clusters illustrated in **Figure 3** may be combined with roles and proficiency level (represented as `PL') to define demand units (also referred in `Bill of Materials' in various embodiments).

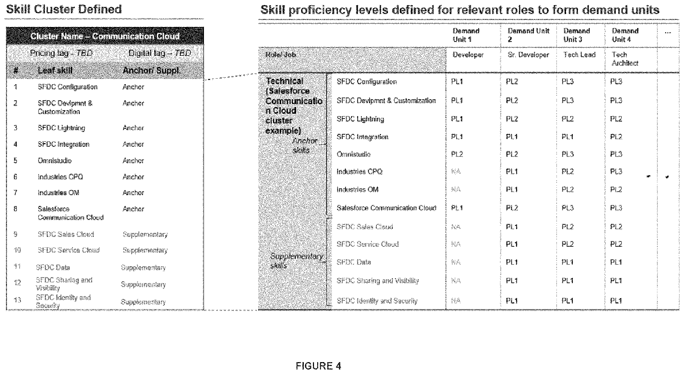

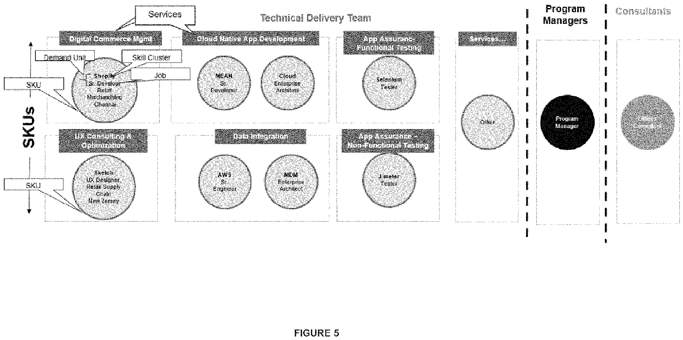

In one or more embodiments, **Figure 4** illustrates an exemplary mapping of technical skill clusters with skill proficient levels that are defined for relevant roles to form demand units wherein the skills are divided based on pre-defined proficiency levels (PL1 being the highest and PL3 being the lowest). The formed demand units along with the information related to domain skills and location preferences may be used to design employee SKUs which may be used as building blocks to forecast skill, as illustrated in **Figure 5****,** for solutioning the client requirements, which forms the skills framework. The **Figure 5** illustrates a graphical representation of generated SKUs for each of the services. For example, for service `Digital Commerce mgmt.' the skill cluster 'Shopify' with the job role `Sr. Developer' together forms the demand unit, which is further mapped to domain skill `retail merchandising' and the location preference 'Chennai' forms one stock keeping unit. Many such stock keeping units are generated by the AI engine which will be delivered to the technical delivery team, which may further be deployed for the client/customer. The skills framework will provide a complete range of SKUs for Client Partners and solutioning, which results in effective identification of right combination of services, skills in demand, skills in supply, proficiencies and location preference for a client outcome requirement, and to ensure best quality, cost, and predictability.

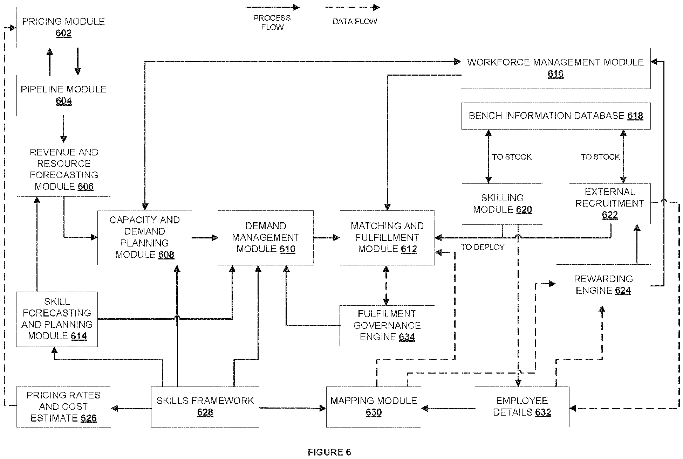

**Figure 6** is a block diagram illustrating a linkage between demand, skills, and rewards and the various components of the system for automated skill forecast and fulfillment, according to one or more embodiments. The components of the system may be, but not limited to, pricing module **602,** pipeline module **604,** revenue and resource forecasting module **606,** capacity and demand planning module **608,** demand management module **610,** matching and fulfillment module **612,** skill forecasting and planning module **614,** workforce management module **616,** bench information database **618,** skilling module **620** , external recruitment module **622,** rewarding engine **624,** pricing rates and cost estimates **626,** skills framework **628,** mapping module **630,** employee repository **632,** and/or fulfilment governance engine **634** wherein the system is configured to perform skill forecasting and fulfillment by identifying premium skills through machine learning models, creating skill cluster tags, mapping of employees to job framework and perform impact assessment.

In one or more embodiments, the skills framework **628** is configured to store list of technological services, skill clusters, role definitions, functional skills, demand unit definitions, locations and/or domain skills, which are provided as input to skill forecasting and planning module **614.** The skill forecasting and planning module **614** may further be configured to send resource and revenue estimates to revenue and resource forecasting module **606** which may further be configured to receive pricing information from the pricing module **602** through pipeline module **604.** The pricing module may be configured to receive information such as costs for service, skill cluster, role and location information from pricing and cost estimate module **626.** The capacity and demand planning module **606** (similar to operational plan module **208)** may be configured to receive resource requirements from the revenue and resource forecasting module **606** which may then be sent to demand management module **610** configured to generate the demand unit (also referred as `Bill of Materials').

In one or more embodiments, employee repository **632** may be configured to store list of employees, their current roles, technical skills, domain skills, proficiency levels and location preferences similar to skill inventory **208** in **Figure 2**. The mapping module **630** may be configured to receive information from the employee repository **632** and map each employee to relevant service(s), skill cluster(s), demand unit(s) based on skills and proficiency possessed, using pre-defined rules. The workforce management module **616** and bench information database **618** may be configured to store employee information when he/she joins the organization and when he/she has not been allocated any project respectively. The skilling module **620** may be configured to capture information of skills of employees and store information of upskill and cross-skill requirements and define adjacent skills required for anchor skills and supplementary skills based on demand requirements. Adjacent skills may be those technical skills which facilitates individual learning paths. The external recruitment module **622** may be configured to store information of ongoing recruitments which provides clear visibility on the resources (employees). The rewarding engine **624** may be configured to generate enhanced graphical view on employee skill proficiencies and experience to assist with hiring and career progression further delinking compensation and career progression from tenure and other straight-line. With the data received from demand management module **610** and mapping module **630,** the matching and fulfilment module **612** (similar to AI engine **210)** may be configured to generate the stock keeping units which may further be communicated to fulfilment governance engine **634** (similar to deployment module **212)** that is configured to provide graphical representation of mapping of best fit resources to respective demand i.e., who can be deployed against a particular skill in a particular location. Alternatively, a reactive skilling is also rendered as output for some of the `near matches' if there are no best matches of employees to the demand units.

In one or more embodiments, a method for automated skill forecast and fulfilment is disclosed and the method comprising, receiving, by an Artificial Intelligence (AI) engine, a skill demand information from a skill cluster repository and a skill supply information from a skill inventory, as in step **702.** The skill demand information comprises at least one or combination of technological services, skill clusters, role definitions, functional skills, demand unit definitions and domain skills. The skill supply information comprises at least one or combination of role definitions, technical skills, domain skills, proficiency levels, and location preferences. The received skill demand information and the skill supply information is parsed as in step **704,** and a bill of materials is generated using the parsed skill demand information, as in step **706.** The generated bill of materials is mapped with the skill supply information based on pre-defined rules as in step **708** and one or more stock keeping units are generated based on the mapping, as in step **710.** The generated one or more stock keeping units comprise list of resources mapped to the skill demand information, and is a combination of technological skill, role definitions, domain skill and location information. The generated one or more stock keeping units are deployed at the client network, as in step **712.** Further the skill demand information stored in the skill cluster repository and the skill supply information stored in the skill inventory are updated based on the deployment of the generated one or more stock keeping units, as in step **714.** Further, the pre-defined rules are updated by the AI engine based on the generated one or more stock keeping units which may be used and applied for forecasting in next iteration.

In one or more embodiments, a system for automated skill forecast and fulfilment is disclosed and the system comprising, at least one processor, at least one memory unit operatively coupled to the at least one processor having stored instructions, an Artificial Intelligence (AI) engine hosted on a cloud computing environment, wherein execution of the instruction stored on the at least one memory unit by the at least one processor causes the AI engine to receive a skill demand information from a skill cluster repository and a skill supply information from a skill inventory. The skill demand information comprises at least one or combination of technological services, skill clusters, role definitions, functional skills, demand unit definitions and domain skills. The skill supply information comprises at least one or combination of role definitions, technical skills, domain skills, proficiency levels, and location preferences. The received skill demand information and the skill supply information is parsed, and a bill of materials is generated using the parsed skill demand information. The generated bill of materials is mapped with the skill supply information based on pre-defined rules and one or more stock keeping units are generated based on the mapping. The generated one or more stock keeping units comprise list of resources mapped to the skill demand information, and is a combination of technological skill, role definitions, domain skill and location information. The generated one or more stock keeping units are deployed at the client network. Further the skill demand information stored in the skill cluster repository and the skill supply information stored in the skill inventory is updated based on the deployment of the generated one or more stock keeping units. Further, the pre-defined rules are updated by the AI engine based on the generated one or more stock keeping units which may be used and applied for forecasting in next iteration.

In one or more embodiments, a non-transitory computer readable storage medium for automated skill forecast and fulfilment is disclosed. The non-transitory computer readable storage medium comprising machine executable code which when executed by at least one processor, causes AI engine to perform steps comprising receiving a skill demand information from a skill cluster repository and a skill supply information from a skill inventory. The skill demand information comprises at least one or combination of technological services, skill clusters, role definitions, functional skills, demand unit definitions and domain skills. The skill supply information comprises at least one or combination of role definitions, technical skills, domain skills, proficiency levels, and location preferences. The received skill demand information and the skill supply information is parsed, and a bill of materials is generated using the parsed skill demand information. The generated bill of materials is mapped with the skill supply information based on pre-defined rules and one or more stock keeping units are generated based on the mapping. The generated one or more stock keeping units comprise list of resources mapped to the skill demand information, and is a combination of technological skill, role definitions, domain skill and location information. The generated one or more stock keeping units are deployed at the client network. Further the skill demand information stored in the skill cluster repository and the skill supply information stored in the skill inventory is updated based on the deployment of the generated one or more stock keeping units. Further, the pre-defined rules are updated by the AI engine based on the generated one or more stock keeping units which may be used and applied for forecasting in next iteration.

With the data processed as described in various embodiments, the system may be configured to perform longer term forecasting of skills, off-target forecasts for premium skills by defining adjacent sills and effectively processing the demand and to perform mapping and fulfillment of the client requirements.

With the technology described in the present disclosure, the system provides a single enterprise-wide skills framework which is primarily market-focused, organized around external view of technology services. Adjacent leaf skills may be defined for technical skills, with supporting training curriculums for cross-skilling and standardized proficiency may be defined for leaf skills across services. With centralized governance of skills framework supported by SaaS-based platform ensures standardization of content and skill clusters governance to further ensure clusters are in-line with market demands.

In one or more embodiments, the system enables structured reskilling of employees based on demand from the clients as well as personal aspirations of the employees. The system may be configured to analyze the requirement of client and the skills that employee have and recommend a possible fulfillment combination through a matching engine comprising AI modules to cater the client requirement effectively. After the reskill, such information are updated in skill inventory by the AI engine. For example, consider that an employee 'A' is skilled in a programming language 'X' and there is a requirement for the client that employee needs to know the programming language `Y'. The employee 'A' is also interested in learning in programming language `Y' as per the data stored in skill inventory, and there is no employee available with the organization who has learnt programming language 'Y'. With the information about the time duration required to learn the course (based communication with learning platform of the organization), the system may determine whether the time required to learn programming language `Y' is less than the deadline time by which the fulfillment needs to be completed for client. The system may consider the employee 'A' as the first preference based on the available data and also recommend the programming language 'Y' for the employee 'A' and simultaneously map the employee 'A' for the client project, resulting in meeting the requirement of client (demand led training) as well as upskilling the knowledge of employee.

In one or more embodiments, the system is configured to capture pricing benchmarks at SKU levels; establish revenue upside potential at an account level; drive client facing actions by account to support pricing uplift on new projects, renewals and existing projects; apply revised rates (aligned to SKUs) in the new deal solutioning process; align standard cost database to SKU-led taxonomy; create modernized employee - SKU inventory (including skill cluster inventory); convert pipeline information into SKU'ized resource requirements; identify capacity requirements and method of fulfillment (hiring vs skilling) by SKU; raise demand using proposed skills taxonomy (services, demand units) as an SKU, as a part of demand management; identify best fit employees using updated matching algorithm (aligned to SKU) for matching and fulfillment; use proficiency expectations to skill up "near matches" identified by a matching engine; leverage employee-SKU mapping to build individual learning plans (adjacent skills).

The advantage of the technology described in the present disclosure is that the system performs structured reskilling of employees based on demand requirements. With the pricing aligned with the market, pricing of portfolio may be performed via identification of premium skill clusters, and timely rate revisions driven by market intelligence, AI models. The system develops commercial model (larger deals, managed services, higher margins) by seamlessly solutioning through SKUs as building blocks, supported by future-ready taxonomy capturing new skills, clusters and services. Through the proposed system, the enterprises can achieve increase in internal fulfillment, driven by increased demand/ supply forecasting accuracy and effective fulfillment (internal vs. external sourcing); consistent proficiency definitions leading to decreased client rejections and targeted learning/ development. The system further achieves compensation strategy based on skill clusters "premiumization" and learning pathways aligned to focus on developing premium skills. Further, with the proposed AI system for preforming skill forecast and fulfillment, the employees will be having clear insights into market-relevant careers that is supported by structured learning paths.

The specification and drawings in the present disclosure are to be regarded in an illustrative rather than a restrictive sense.

## Claims

1. A computer implemented method for automated skill forecast and fulfilment, comprising:
receiving, by an Artificial Intelligence (AI) engine, a skill demand information from a skill cluster repository and a skill supply information from a skill inventory;
parsing, by the AI engine, the received skill demand information and the skill supply information;
generating, by the AI engine, a bill of materials using the parsed skill demand information;
mapping, by the AI engine, the generated bill of materials with the skill supply information based on pre-defined rules; and
generating, by the AI engine, one or more stock keeping units based on the mapping, further causing deployment of the generated one or more stock keeping units at client network, wherein the one or more stock keeping units comprise list of resources mapped to the skill demand information.

2. The method of claim 1, further comprising, updating the skill demand information stored in the skill cluster repository and the skill supply information stored in the skill inventory, based on the deployment of the generated one or more stock keeping units.

3. The method of claim 1, wherein each of the one or more stock keeping units is a combination of technological skill, role definitions, domain skill and location information.

4. The method of claim 1, wherein the skill demand information comprises at least one or combination of technological services, skill clusters, role definitions, functional skills, demand unit definitions and domain skills.

5. The method of claim 1, wherein the skill supply information comprises at least one or combination of role definitions, technical skills, domain skills, proficiency levels, and location preferences.

6. The method of claim 1, wherein the pre-defined rules are updated by the AI engine based on the generated one or more stock keeping units.

7. A system for automated skill forecast and fulfilment, comprising:
at least one processor;
at least one memory unit operatively coupled to the at least one processor having stored instructions; and
an Artificial Intelligence (AI) engine hosted on a cloud computing environment, wherein execution of the instruction stored on the at least one memory unit by the at least one processor causes the AI engine to:
receive, a skill demand information from a skill cluster repository and a skill supply information from a skill inventory;
parse, the received skill demand information and the skill supply information;
generate, a bill of materials using the parsed skill demand information;
map, the generated bill of materials with the skill supply information based on pre-defined rules; and
generate, one or more stock keeping units based on the mapping, further causing deployment of the generated one or more stock keeping units at client network, wherein the one or more stock keeping units comprise list of resources mapped to the skill demand information.

8. The system of claim 7, wherein the at least one processor further causes the AI engine to update the skill demand information stored in the skill cluster repository and the skill supply information stored in the skill inventory, based on the deployment of the generated one or more stock keeping units.

9. The system of claim 7, wherein each of the one or more stock keeping units is a combination of technological skill, role definitions, domain skill and location information.

10. The system of claim 7, wherein the skill demand information comprises at least one or combination of technological services, skill clusters, role definitions, functional skills, demand unit definitions and domain skills.

11. The system of claim 7, wherein the skill supply information comprises at least one or combination of role definitions, technical skills, domain skills, proficiency levels and location preferences.

12. The system of claim 7, wherein the pre-defined rules are updated by the AI engine based on the generated one or more stock keeping units.
